# EUROPEAN PATENT SPECIFICATION

(11) **EP 1 486 964 B1**
(45) Date of publication and mention of the grant of the patent: **02.09.2009**
(21) Application number: 04013896.8
(22) Date of filing: 14.06.2004
(51) Int. Cl.: G11B 7/26, G11B 7/24

(54) **Method for manufacturing an optical information recording medium**
Verfahren zur Herstellung eines optischen Informationsaufzeichnungsmediums
Procédé de fabrication d'un support d'enregistrement optique d'informations

(30) Priority: 13.06.2003 JP 2003169019; 10.09.2003 JP 2003318104
(43) Date of publication of application: 15.12.2004
(73) Proprietor: NEC CORPORATION, Tokyo (JP)
(72) Inventor: Kariyada, Eiji, c/o NEC Corporation, Minato-ku Tokyo (JP)
(74) Representative: Vossius & Partner

(56) References cited:
- EP-A- 0 945 860
- EP-A2- 0 606 129
- US-A- 5 761 188
- US-A- 6 153 063
- US-B1- 6 240 060

## Description

The present invention relates to an optical information recording medium on which information is recorded by irradiating a laser beam from, for example, a rewritable optical information recording and reproducing device and a method for manufacturing the same, in particular, to a phase-change optical disc for recording information by changing the phase state of a recording layer into an amorphous state or a crystalline state, and for reproducing the information by utilizing the difference between the optical characteristics depending on the phase states of the recording layer, and a method for manufacturing the same.

An optical information recording and reproducing system using a laser beam has been practically used as large capacity optical storage in various fields. In the optical information recording and reproducing system, large amounts of information can be recorded and reproduced in a medium at high-speed by accessing a head to the medium without contact. Compact discs and laser discs are known examples of the optical information recording media used for the optical information recording and reproducing system. The optical information recording media are classified into reproduction-only media wherein data can only be reproduced by a user, write-once media wherein new data can be recorded by a user, and rewritable media wherein data can be repeatedly recorded and erased by a user. The write-once and rewritable optical information recording media have been used as an external memory of a computer, and media for storing document files and image files.

The rewritable optical information recording media include phase-change optical discs utilizing the phase-change of a recording layer and magneto-optical discs utilizing a change in the magnetization direction of a perpendicular magnetic anisotropy layer. Unlike the magneto-optical discs, the phase-change optical discs record information without an external magnetic field. In addition, information is readily overwritten in the phase-change optical discs. Therefore, the phase-change optical discs are expected to be the mainstream of rewritable optical information recording media in the future.

In a recording layer of conventional phase-changing optical discs, in general, the optical absorptivity Aa in the amorphous state is higher than the optical absorptivity Ac in the crystalline state. In order to increase the recording density, the pitches of the recording tracks of the phase-change optical disc are narrowed. In this case, however, cross erasure occurs. The cross erasure is the following phenomenon. When a certain track is irradiated with a laser beam to perform recording, a recording mark disposed on an adjacent recording track on which information has already been recorded and which is in the amorphous state having a high optical absorptivity absorbs the laser beam with high absorptivity. Consequently, the recording mark, which is in the amorphous state, is crystallized because of a rise in temperature. Thus, the recorded information on the recording mark is unintentionally erased.

As described, for example, in US-A-6240060 (corresponding to JP-A-2000-90491) which is considered to be the closest prior-art and JP-A-2000-105946, in order to prevent this cross erasure, it is effective to control the optical absorptivity Aa in the amorphous state of the recording layer such that it is lower than the optical absorptivity Ac in the crystalline state. The following method for controlling the Aa to a lower level than the Ac is disclosed. According to the method, in a phase-change optical disc, a first dielectric layer, a second dielectric layer, a third dielectric layer, a first interface layer, a recording layer, a second interface layer, a fourth dielectric layer, and a reflecting layer are laminated on a substrate in this order. According to the method, the refractive index n2 of the second dielectric layer is lower than the refractive index n3 of the third dielectric layer, i.e., n2 < n3. In addition, the refractive index n1 of the first dielectric layer is higher than the refractive index n2 of the second dielectric layer, i.e., n2 < n1.

In general, a ZnS-SiO₂ layer having a refractive index of about 2.3 is used as the first dielectric layer and the third dielectric layer. A SiO₂ layer having a refractive index of about 1.5 or an Al₂O₃ layer having a refractive index of about 1.7 is used as the second dielectric layer. In some cases, a SiN layer having a refractive index of about 1.9 is used as the second dielectric layer.

US-A-6153063 discloses a method for manufacturing an optical phase-change recording medium, in particular of the including barrier layer. The barrier layer is based on Ge oxynitride and part of the single or double layer structure between recording layer and substrate.

However, the prior arts described above have the following problems. When a SiO₂ layer or an Al₂O₃ layer is used as the second dielectric layer, the SiO₂ layer or the Al₂O₃ layer is deposited by sputtering in a rare gas such as argon (Ar) using a target composed of a sintered product of SiO₂ or Al₂O₃. According to this deposition method in which a target composed of the sintered product of the oxide is used and is performed in a rare gas such as Ar, the oxygen-silicon bond or the oxygen-aluminum bond is cut during the deposition. Consequently, the deposited layer has a low density due to an oxygen defect.

Such a layer having the oxygen defect unintentionally has a high refractive index, and therefore, the difference between the refractive indexes of the first and the third dielectric layers and the refractive index of the layer becomes small. Accordingly, in a phase-change optical disc using this layer as the second dielectric layer, in order to control the optical absorptivity Aa in the amorphous state of the recording layer so that it is lower than the optical absorptivity Ac in the crystalline state, the phase-change optical disc must have a large total thickness. Unfortunately, this phase-change optical disc produces high noise and productivity is low.

Accordingly, it is an object of the present invention to provide a method for manufacturing an optical information recording medium with high productivity wherein a first dielectric layer, a second dielectric layer, and a third dielectric layer are disposed in this order between a substrate and a recording layer, the optical information recording medium including the second dielectric layer without an oxygen defect and having a low refractive index. This object is achieved with the features of the claims.

An optical information recording medium producible according to the present invention includes: a substrate; a first dielectric layer formed on the substrate; a second dielectric layer composed of an oxynitride formed by reactive sputtering on the first dielectric layer, the second dielectric layer having a refractive index lower than the refractive index of the first dielectric layer; a third dielectric layer formed on the second dielectric layer having a refractive index higher than the refractive index of the second dielectric layer; and a recording layer formed on the third dielectric layer, the recording layer for recording information by changing the phase state into an amorphous state or a crystalline state with light incident from the outside. In addition, the optical absorptivity in the amorphous state of the recording layer is lower than the optical absorptivity in the crystalline state when light enters from the substrate.

According to the present invention, since the second dielectric layer is formed by reactive sputtering, an oxygen defect can be prevented in the second dielectric layer, and therefore, the refractive index of the second dielectric layer can be decreased. Consequently, the increase in noise can be prevented in the optical information recording medium.

The oxynitride may be an oxynitride selected from the group consisting of silicon oxynitride, aluminum oxynitride, and aluminum silicon oxynitride. The second dielectric layer may have a refractive index of from 1.4 to 1.8.

Furthermore, the oxynitride may be a silicon oxynitride containing from 20 to 70 atomic percent of oxygen, an aluminum oxynitride containing from 20 to 60 atomic percent of oxygen, or an aluminum silicon oxynitride containing from 20 to 70 atomic percent of oxygen.

A method for manufacturing an optical information recording medium according to the present invention includes steps of: forming a first dielectric layer on a substrate; forming a second dielectric layer composed of an oxynitride on the first dielectric layer by reactive sputtering in an atmosphere containing argon gas, oxygen gas, and nitrogen gas; forming a third dielectric layer on the second dielectric layer; and forming a recording layer on the third dielectric layer.

According to the present invention, the second dielectric layer is formed by reactive sputtering in an atmosphere containing argon gas, oxygen gas, and nitrogen gas. This method prevents an oxygen defect in the second dielectric layer and allows the second dielectric layer to be deposited efficiently. Accordingly, an optical information recording medium having low noise can be produced with high productivity.

The reactive sputtering may be performed using a target containing silicon and using a mixed gas composed of argon, oxygen, and nitrogen. In this case, the argon content in the mixed gas is preferably from 70 to 90 volume percent, the oxygen content in the mixed gas is preferably from 2 to 6 volume percent, and the nitrogen content in the mixed gas is preferably from 4 to 28 volume percent.

Alternatively, the reactive sputtering may be performed using a target containing aluminum and using a mixed gas composed of argon, oxygen, and nitrogen. In this case, the composition of the mixed gas preferably lies in a pentagon including five sides in a ternary diagram showing volume contents of argon gas, oxygen gas, and nitrogen gas, the pentagon being formed by linking a first point in which the argon content is 90 volume percent, the oxygen content is 6 volume percent, and the nitrogen content is 4 volume percent; a second point in which the argon content is 70 volume percent, the oxygen content is 6 volume percent, and the nitrogen content is 24 volume percent; a third point in which the argon content is 70 volume percent, the oxygen content is 2 volume percent, and the nitrogen content is 28 volume percent; a fourth point in which the argon content is 80 volume percent, the oxygen content is 2 volume percent, and the nitrogen content is 18 volume percent; and a fifth point in which the argon content is 90 volume percent, the oxygen content is 3 volume percent, and the nitrogen content is 7 volume percent.

Alternatively, the reactive sputtering may be performed using a target containing silicon and aluminum and using a mixed gas composed of argon, oxygen, and nitrogen. In this case, the argon content in the mixed gas is preferably from 70 to 90 volume percent, the oxygen content in the mixed gas is preferably from 2 to 6 volume percent, and the nitrogen content in the mixed gas is preferably from 4 to 28 volume percent.

According to the present invention, in an optical information recording medium having a first dielectric layer, a second dielectric layer, and a third dielectric layer, the three dielectric layers being formed between a substrate and a recording layer in this order, the second dielectric layer is formed by reactive sputtering. Accordingly, an oxygen defect can be prevented in the second dielectric layer, and the increase in noise can be prevented in the optical information recording medium. Since the reactive sputtering is performed in an atmosphere containing argon gas, oxygen gas, and nitrogen gas, the second dielectric layer can be deposited efficiently. Accordingly, an optical information recording medium having low noise can be produced with high productivity.

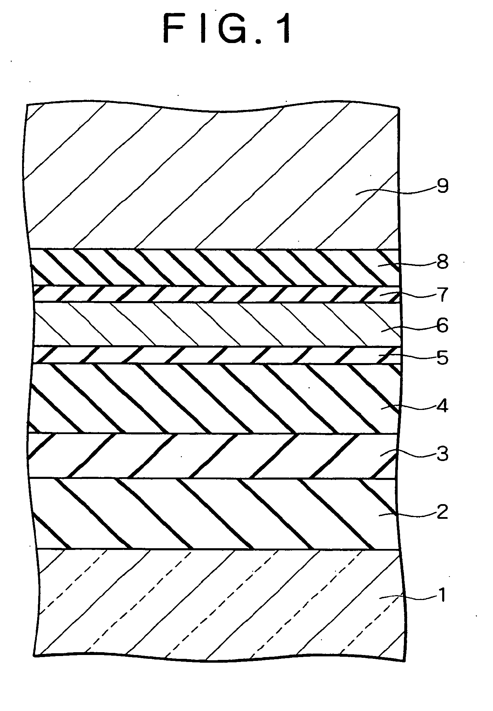

Embodiments of the present invention will now be described in detail with reference to the attached drawings.
Fig. 1 is cross-sectional view of an optical disc according to a first embodiment of the present invention;
Fig. 2 is a ternary diagram showing the compositional range of the atmospheric gas wherein a second dielectric layer is formed by reactive sputtering, according to a fourth embodiment of the present invention;
Fig. 3 is a graph showing an effect of O₂ gas in a mixed gas on the deposition rate, wherein the horizontal axis indicates the O₂ gas content in the mixed gas and the vertical axis indicates the deposition rate of a silicon oxynitride layer;
Fig. 4 is a graph showing an effect of O₂ gas in a mixed gas on the refractive index, wherein the horizontal axis indicates the O₂ gas content in the mixed gas and the vertical axis indicates the refractive index of a silicon oxynitride layer;
Fig. 5 is a graph showing a relationship between the refractive index and the composition of a silicon oxynitride layer, wherein the horizontal axis indicates the refractive index of the silicon oxynitride layer and the vertical axis indicates the analytical results of the contents of Si, O, and N in the silicon oxynitride layer;
Fig. 6 is a graph showing a relationship between the refractive index and the density of the silicon oxynitride layer, wherein the horizontal axis indicates the refractive index of the silicon oxynitride layer shown in Fig. 5 and the vertical axis indicates the density of the silicon oxynitride layer;
Fig. 7 is a graph showing an effect of O₂ gas in a mixed gas, which does not contain N₂ gas, on the deposition rate and the refractive index, wherein the horizontal axis indicates the O₂ gas content in the mixed gas and the vertical axis indicates the deposition rate and the refractive index of a silicon oxide layer;
Fig. 8 is a ternary diagram showing the compositional range of the atmospheric gas wherein a second dielectric layer is formed by reactive sputtering, according to a fifth embodiment of the present invention;
Fig. 9 is a graph showing an effect of O₂ gas in a mixed gas on the deposition rate, wherein the horizontal axis indicates the O₂ gas content in the mixed gas and the vertical axis indicates the deposition rate of an aluminum oxynitride layer;
Fig. 10 is a graph showing an effect of O₂ gas in a mixed gas on the refractive index, wherein the horizontal axis indicates the O₂ gas content in the mixed gas and the vertical axis indicates the refractive index of an aluminum oxynitride layer; and
Fig. 11 is a graph showing an effect of O₂ gas in a mixed gas, which does not contain N₂ gas, on the deposition rate and the refractive index, wherein the horizontal axis indicates the O₂ gas content in the mixed gas and the vertical axis indicates the deposition rate and the refractive index of an aluminum oxide layer.
A first example will now be described. Fig. 1 is cross-sectional view of an optical disc, which is an optical information recording medium according to the present example. This optical disc is a rewritable phase-change optical disc such as a digital versatile disc (DVD). Referring to Fig. 1, the optical disc of the present example includes a transparent substrate 1. A first dielectric layer 2, a second dielectric layer 3, a third dielectric layer 4, a first interface layer 5, a recording layer 6, a second interface layer 7, a fourth dielectric layer 8, and a reflecting layer 9 are disposed on the transparent substrate 1 in this order. Another transparent substrate (not shown in the figure) is laminated on the reflecting layer 9.

For example, the transparent substrate 1 is composed of a plastic, a resin, or glass, and has a thickness of 0.6 mm. Lands and grooves, which are wobbled at substantially the same cycle, are alternately formed on the transparent substrate 1 to form recording tracks. Furthermore, format modulation portions of a wobble modulation type, the format modulation portions being formed by modulating the groove wobbles in the recording tracks, are formed on the transparent substrate 1. The format modulation portions in the recording tracks are disposed so as not to overlap each other in the radial direction between the adjacent recording tracks.

The first dielectric layer 2, the third dielectric layer 4, and the fourth dielectric layer 8 are composed of, for example, ZnS-SiO₂. The second dielectric layer 3 is composed of an oxynitride dielectric material such as silicon oxynitride. Although silicon oxynitride may be hereinafter described as SiON, the stoichiometric ratio of Si, O, and N in the silicon oxynitride is not limited to 1:1:1. The silicon oxynitride (SiON) layer of the second dielectric layer 3 is deposited by reactive sputtering. The oxygen concentration of the SiON layer is, for example, 20 to 70 atomic percent. The first interface layer 5 and the second interface layer 7 are composed of, for example, GeN. The recording layer 6 is composed of, for example, Ge₂Sb₂Te₅. The reflecting layer 9 is composed of, for example, AlTi. Furthermore, the other transparent substrate (not shown in the figure) has a thickness of, for example, 0.6 mm.

According to the present example, the optical absorptivity Aa of the optical disc in which the recording layer 6 is in the amorphous state is lower than the optical absorptivity Ac of the optical disc in which the recording layer 6 is in the crystalline state. This relationship is hereinafter described as "Aa < Ac". The optical absorptivity of the optical disc is determined by the overall optical characteristics of the first dielectric layer 2, the second dielectric layer 3, the third dielectric layer 4, and the recording layer 6.

As described above, the layers have the following refractive indexes so that the relationship between the optical absorptivities Aa and Ac of the optical disc is satisfied with the formula Aa < Ac. The refractive index n0 of the transparent substrate 1 composed of a plastic, a resin, or glass is generally about 1.5 to about 1.6. Accordingly, the refractive index n1 of the first dielectric layer 2 must be higher than this refractive index n0. The reason for this is as follows. When the refractive index n1 of the first dielectric layer 2 is substantially equal to the refractive index n0 of the transparent substrate 1, the first dielectric layer 2 and the transparent substrate 1 become optically equivalent, and therefore the above relationship Aa < Ac can not be satisfied. In addition, the first dielectric layer 2 must have good adhesiveness to the transparent substrate 1. For these reasons, the first dielectric layer 2, the third dielectric layer 4, and the fourth dielectric layer 8 are composed of a ZnS-SiO₂ layer. The ZnS-SiO₂ layer has a refractive index of about 2.35.

The SiON layer, which forms the second dielectric layer 3, has a refractive index of about 1.4 to about 1.8. Accordingly, the relationship between the refractive index n2 of the second dielectric layer 3 and the refractive index n3 of the third dielectric layer 4 is satisfied with a formula n2 < n3. The relationship between the refractive index n1 of the first dielectric layer 2 and the refractive index n2 of the second dielectric layer 3 is satisfied with a formula n1 > n2. Thus, in the recording layer 6, the optical absorptivity Aa in the amorphous state is lower than the optical absorptivity Ac in the crystalline state.

As will be described later, when the oxygen concentration of the SiON layer of the second dielectric layer 3 is less than 20 atomic percent, the refractive index (n2) of the SiON layer becomes too high. Therefore, the thickness of the fourth dielectric layer 8 must be increased in order to satisfy the relationship Aa < Ac. As a result, the ability to repeatedly record on and reproduce from the optical disc is deteriorated. Repetitive recording and reproducing of information on such an optical disc deteriorates the signal quality. On the other hand, when the SiON layer is deposited such that the oxygen concentration of the SiON layer is more than 70 atomic percent, the deposition rate is decreased. In this case, productivity is decreased. Accordingly, the oxygen concentration of the SiON layer is preferably 20 to 70 atomic percent.

The operation of the optical disc having the above structure according to the present example will now be described. The operation for recording information on the optical disc will now be described. In the initial state, the entire area of the recording layer 6 is in the crystalline state. The transparent substrate 1 is irradiated with a laser beam from the lower part. The laser beam passes through the transparent substrate 1, the first dielectric layer 2, the second dielectric layer 3, the third dielectric layer 4, and the first interface layer 5 and enters the recording layer 6. The laser beam passing through the recording layer 6 passes through the second interface layer 7 and the fourth dielectric layer 8, and is reflected by the reflecting layer 9. The laser beam again passes through the fourth dielectric layer 8 and the second interface layer 7 and enters the recording layer 6, thereby heating a recording spot of the recording layer 6 to a temperature equal to or higher than the melting point in order to melt the recording spot of the recording layer 6. The recording spot is changed into the amorphous state during solidification, thus recording information.

In order to read out the information recorded on the optical disc, the recording layer 6 is irradiated with a laser beam from the transparent substrate 1, thereby detecting the difference in the reflectance between areas corresponding to the recording spots of the recording layer 6 in the optical disc. In the recording layer 6, the reflectance in the amorphous state is higher than the reflectance in the crystalline state. The recorded information can be read out by detecting the difference in the reflectance. In order to erase the recorded information, the recording spot of the recording layer 6 is heated by a laser beam to a temperature higher than the crystallization temperature and lower than the melting point. The recording spot of the recording layer 6 is crystallized, thus erasing the information.

According to the present example, the second dielectric layer 3 composed of a silicon oxynitride layer is formed by reactive sputtering, thereby producing a silicon oxynitride layer having a high oxygen concentration. Therefore, according to this optical disc, noise can be suppressed in the reproduction of the recorded information.

A second example will now be described. The difference between the second example and the first example is that the second dielectric layer 3 (see, Fig. 1) is composed of an aluminum oxynitride layer deposited by reactive sputtering. Although aluminum oxynitride may be hereinafter described as AlON, the stoichiometric ratio of Al, O, and N in the aluminum oxynitride is not limited to 1:1:1. The oxygen concentration of the aluminum oxynitride (AlON) layer is, for example, 20 to 60 atomic percent. The reason for this is as follows. As will be described later, when the oxygen concentration of the AlON layer is less than 20 atomic percent, the refractive index (n2) of the AlON layer becomes too high. Therefore, the thickness of the fourth dielectric layer 8 must be increased in order to satisfy the relationship Aa < Ac. As a result, the ability to repeatedly record on and reproduce from the optical disc is deteriorated. Repetitive recording and reproducing of information on such an optical disc deteriorates the signal quality. On the other hand, when the AlON layer is deposited such that the oxygen concentration of the AlON layer is more than 60 atomic percent, the deposition rate is decreased. In this case, productivity is decreased. Accordingly, the oxygen concentration of the AlON layer is preferably 20 to 60 atomic percent. The rest of the structure, the operation, and the advantage in the present example are the same as in the first example.

A third example will now be described. The difference between the third example and the first example is that the second dielectric layer 3 (see, Fig. 1) is composed of an aluminum silicon oxynitride layer deposited by reactive sputtering. Although aluminum silicon oxynitride may be hereinafter described as AlSiON, the stoichiometric ratio of Al, Si, O, and N in the aluminum silicon oxynitride is not limited to 1:1:1:1. The oxygen concentration of the aluminum silicon oxynitride (AlSiON) layer is, for example, 20 to 70 atomic percent. The reason for this is as follows. As will be described later, when the oxygen concentration of the AlSiON layer is less than 20 atomic percent, the refractive index (n2) of the AlSiON layer becomes too high. Therefore, the thickness of the fourth dielectric layer 8 must be increased in order to satisfy the relationship Aa < Ac. As a result, the ability to repeatedly record on and reproduce from the optical disc is deteriorated. Repetitive recording and reproducing of information on such an optical disc deteriorates the signal quality. On the other hand, when the AlSiON layer is deposited such that the oxygen concentration of the AlSiON layer is more than 70 atomic percent, the deposition rate is decreased. In this case, productivity is decreased. Accordingly, the oxygen concentration of the AlSiON layer is preferably 20 to 70 atomic percent. The rest of the structure, the operation, and the advantage in the present example are the same as in the first example.

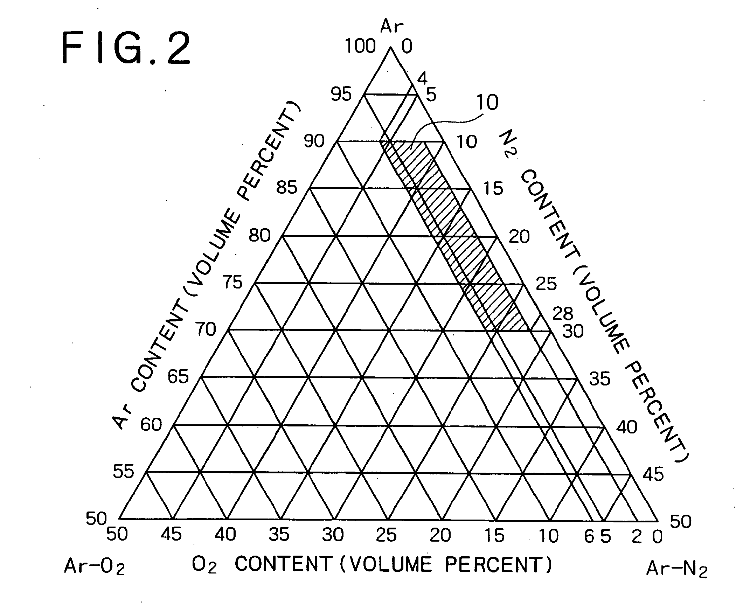

A first embodiment of the present invention will now be described. Fig. 2 is a ternary diagram showing the compositional range of the atmospheric gas wherein the second dielectric layer 3 is formed by reactive sputtering in the present embodiment. The present embodiment relates to a method for manufacturing the optical information recording medium (i.e., optical disc) according to the above first example. As shown in Fig. 1, the first dielectric layer 2, the second dielectric layer 3, the third dielectric layer 4, the first interface layer 5, the recording layer 6, the second interface layer 7, the fourth dielectric layer 8, and the reflecting layer 9 are formed on the transparent substrate 1 having grooves (not shown in the figure) for guiding a laser beam thereon with an in-line sputtering apparatus as in the following procedures. In this in-line sputtering apparatus, the distance between a target and the substrate is, for example, 15 cm.

Firstly, in order to form the first dielectric layer 2, a ZnS-SiO₂ layer is deposited on the transparent substrate 1 by sputtering such that the ZnS-SiO₂ layer has a thickness of, for example, 35 nm. The sputtering is performed using a target composed of ZnS-SiO₂ in an Ar gas atmosphere with a gas pressure of, for example, 0.1 Pa. The power density is, for example, 2.2 W/cm².

In order to form the second dielectric layer 3, a silicon oxynitride (SiON) layer is deposited on the first dielectric layer 2 by reactive sputtering such that the SiON layer has a thickness of, for example, 40 nm. The reactive sputtering is performed using a target composed of Si in a mixed gas atmosphere containing Ar, N₂, and O₂ with a gas pressure of, for example, 0.2 Pa. The power density is, for example, 2.5 W/cm². Referring to Fig. 2, the composition of the mixed gas used in this reactive sputtering lies in an area 10. In other words, the Ar content is from 70 to 90 volume percent, the O₂ content is from 2 to 6 volume percent, and the N₂ content, i.e., the remaining portion, is from 4 to 28 volume percent.

In order to form the third dielectric layer 4, a ZnS-SiO₂ layer is deposited on the second dielectric layer 3 by sputtering such that the ZnS-SiO₂ layer has a thickness of, for example, 30 nm. The sputtering is performed using a target composed of ZnS-SiO₂ in an Ar gas atmosphere with a gas pressure of, for example, 0.1 Pa. The power density is, for example, 2.2 W/cm².

In order to form the first interface layer 5, a GeN layer is deposited on the third dielectric layer 4 by reactive sputtering such that the GeN layer has a thickness of, for example, 5 nm. The reactive sputtering is performed using a target composed of Ge in a mixed gas atmosphere containing Ar and N₂ with a gas pressure of, for example, 0.9 Pa. The power density is, for example, 0.8 W/cm².

In order to form the recording layer 6, a Ge₂Sb₂Te₅ layer is deposited on the first interface layer 5 by sputtering such that the Ge₂Sb₂Te₅ layer has a thickness of, for example, 13 nm. The sputtering is performed using a target composed of Ge₂Sb₂Te₅ in an Ar gas atmosphere with a gas pressure of, for example, 1.0 Pa. The power density is, for example, 0.27 W/cm².

In order to form the second interface layer 7, a GeN layer is deposited on the recording layer 6 by reactive sputtering such that the GeN layer has a thickness of, for example, 5 nm. The reactive sputtering is performed using a target composed of Ge in a mixed gas atmosphere containing Ar and N₂ with a gas pressure of, for example, 0.9 Pa. The power density is, for example, 0.8 W/cm².

In order to form the fourth dielectric layer 8, a ZnS-SiO₂ layer is deposited on the second interface layer 7 by sputtering such that the ZnS-SiO₂ layer has a thickness of, for example, 25 nm. The sputtering is performed using a target composed of ZnS-SiO₂ in an Ar gas atmosphere with a gas pressure of, for example, 0.1 Pa. The power density is, for example, 2.2 W/cm².

In order to form the reflecting layer 9, an AlTi alloy layer is deposited on the fourth dielectric layer 8 by sputtering such that the AlTi alloy layer has a thickness of, for example, 100 nm. The sputtering is performed using a target composed of the AlTi alloy containing 2 mass percent of Ti in an Ar gas atmosphere with a gas pressure of, for example, 0.08 Pa. The power density is, for example, 1.6 W/cm².

Subsequently, a transparent substrate (not shown in the figure) having a thickness of, for example, 0.6 mm is laminated on the reflecting layer 9 to produce the phase-change optical disc according to the first example.

As described above, according to the preferable composition of the mixed gas used for depositing the second dielectric layer 3, the Ar content is from 70 to 90 volume percent, the O₂ content is from 2 to 6 volume percent, and the N₂ content is from 4 to 28 volume percent. The reason for this will now be described.

A SiON layer, which forms the second dielectric layer 3, is deposited by the method according to the first embodiment. In the method, the composition of a mixed gas used in the reactive sputtering is changed as follows: The Ar content is changed from 60 to 95 volume percent, the O₂ content is changed from 0 to 10 volume percent, and the N₂ content is changed from 1 to 40 volume percent. As described above, a target composed of Si is used and the gas pressure during deposition is fixed at 0.2 Pa.

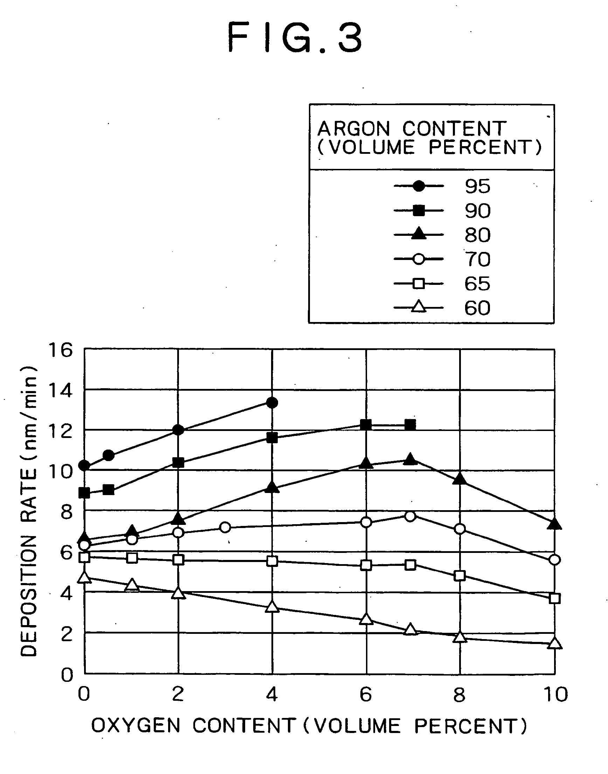

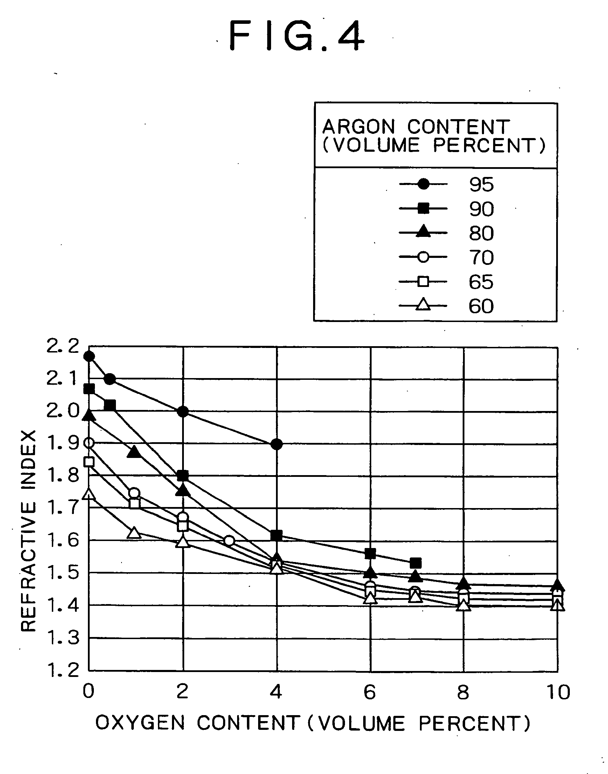

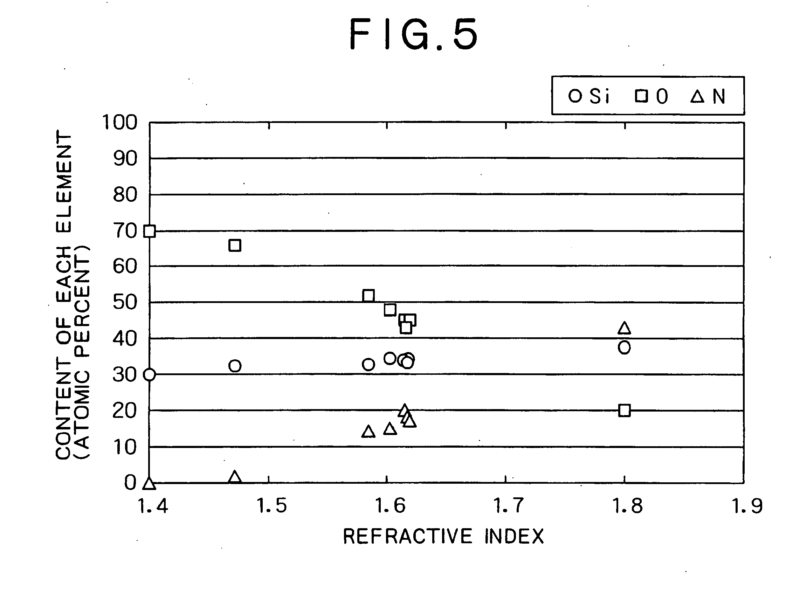

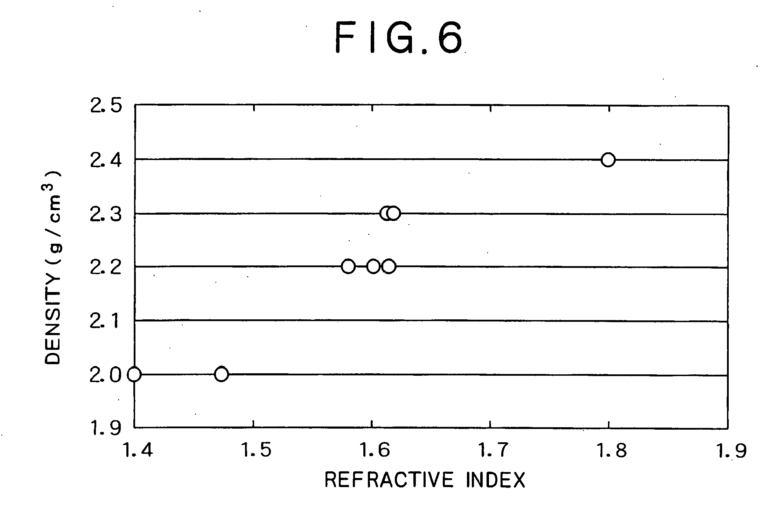

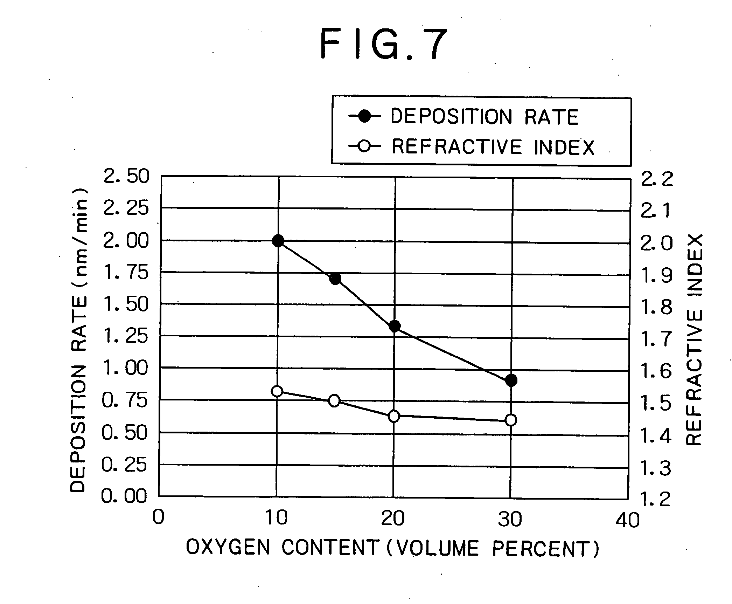

Fig. 3 is a graph showing an effect of O₂ gas (oxygen content) in a mixed gas on the deposition rate. In Fig. 3, the horizontal axis indicates the O₂ gas content in the mixed gas, and the vertical axis indicates the deposition rate of a SiON layer. Fig. 4 is a graph showing an effect of O₂ gas (oxygen content) in a mixed gas on the refractive index. In Fig. 4, the horizontal axis indicates the O₂ gas content in the mixed gas, and the vertical axis indicates the refractive index of a SiON layer. Fig. 5 is a graph showing a relationship between the refractive index and the composition of a SiON layer. In Fig. 5, the horizontal axis indicates the refractive index of the SiON layer, and the vertical axis indicates the analytical results of the contents of Si, O, and N in the SiON layer. Fig. 6 is a graph showing a relationship between the refractive index and the density of the SiON layer. In Fig. 6, the horizontal axis indicates the refractive index of the SiON layer shown in Fig. 5, and the vertical axis indicates the density of the SiON layer. Fig. 7 is a graph showing an effect of O₂ gas (oxygen content) in a mixed gas, which does not contain N₂ gas, on the deposition rate and the refractive index. In Fig. 7, the horizontal axis indicates the O₂ gas content in the mixed gas, and the vertical axis indicates the deposition rate and the refractive index of a silicon oxide (SiO) layer. Although Figs. 3 and 4 show only the Ar gas content and the O₂ gas content, the N₂ gas content is represented by subtracting the Ar content and the O₂ content from the total volume (100 volume percent).

Referring to Fig. 3, when the Ar gas content is 70 volume percent or more, the increase in the O₂ gas content increases the deposition rate of the SiON layer. In a fixed O₂ gas content, as the Ar gas content is increased, the deposition rate of the SiON layer is increased. In contrast, when the Ar gas content is 65 volume percent or less, the increase in the O₂ gas content gradually decreases the deposition rate of the SiON layer.

Referring to Fig. 4, the increase in the O₂ gas content gradually decreases the refractive index of the SiON layer. As the Ar gas content is decreased, the refractive index is decreased.

As described above, the refractive index of the second dielectric layer 3 must be lower than the refractive index (2.35) of the ZnS-SiO₂ layers that form the first dielectric layer 2 and the third dielectric layer 4. In addition, the refractive index (2.35) of these first and third dielectric layers 2 and 4, and the refractive index of the second dielectric layer 3 must have a large difference. Examples will now be described. When the refractive index of the second dielectric layer 3 is from 1.4 to 1.8, in order to satisfy the relationship Aa < Ac in terms of the optical absorptivity, the fourth dielectric layer 8 (a ZnS-SiO₂ layer) has a thickness of, for example, 15 to 40 nm. In this case, the thickness can be selected so that it is relatively small in size and has a relatively wide range.

In contrast, when the refractive index of the second dielectric layer 3 is from 1.9 to 2.0, in order to satisfy the relationship Aa < Ac in terms of the optical absorptivity, the fourth dielectric layer 8 (a ZnS-SiO₂ layer) must have a thickness of, for example, 40 to 50 nm. In this case, the thickness is limited to a relatively large in size and has a narrow range. Productivity of such an optical disc is low. In addition, when information is repeatedly recorded on and reproduced from such an optical disc, the signal quality is deteriorated.

Furthermore, when the refractive index of the second dielectric layer 3 is from 2.0 to 2.2, the difference between the refractive index (2.35) of the first and third dielectric layers 2 and 4, and the refractive index of the second dielectric layer 3 becomes small. Consequently, there is no solution regarding the thickness of the fourth dielectric layer 8 (a ZnS-SiO₂ layer) for satisfying the relationship Aa < Ac in terms of the optical absorptivity. In this case, the medium cannot be designed. For these reasons, the refractive index of the second dielectric layer 3 is preferably below 1.9, more preferably, 1.8 or less. In view of productivity, the deposition rate is required to be as high as possible.

A mixed gas containing from 70 to 90 volume percent of Ar gas and from 2 to 10 volume percent of O₂ gas meets the above conditions. However, using a mixed gas containing 7 volume percent or more of O₂ gas gradually decreases the deposition rate. Therefore, according to the composition of a preferable mixed gas, the content of Ar gas is from 70 to 90 volume percent, the content of O₂ gas is from 2 to 6 volume percent, and the content of N₂ gas is from 4 to 28 volume percent.

A SiON layer deposited by reactive sputtering in a mixed gas having the above composition has a refractive index (n2) of from 1.4 to 1.8. In the recording layer 6 of a phase-change optical disc having the second dielectric layer 3 deposited by the above method, the optical absorptivity (Ac) in the crystalline state and the optical absorptivity (Aa) in the amorphous state are measured. In a SiON layer having a refractive index (n2) of 1.4, the Aa is 62.2% and the Ac is 82.4%. In a SiON layer having a refractive index (n2) of 1.8, the Aa is 60.2% and the Ac is 81.5%. Both of the layers satisfy the relationship Aa < Ac.

Referring to Fig. 5, when the refractive index of the SiON layer is from 1.4 to 1.8, the increase in the refractive index decreases the oxygen content in the layer, increases the nitrogen content in the layer, and gradually increases the silicon content in the layer. Referring to Fig. 6, as the refractive index of the SiON layer increases, the density of the SiON layer is increased. In Figs. 5 and 6, coordinate points disposed at the same refractive index value represent the composition and the density of the same silicon oxynitride layer. The contents of each element and the densities of the above layers are analyzed by Rutherford backscattering spectrometry (RBS) and a nuclear reaction analysis (NRA).

Referring to Figs. 5 and 6, according to the SiON layers produced using a mixed gas having the above composition, the layer having the refractive index (n2) of 1.4 contains 70 atomic percent of oxygen and has a density of 2.0 g/cm³. The layer having the refractive index (n2) of 1.8 contains 20 atomic percent of oxygen and has a density of 2.4 g/cm³. As described above, when an optical disc has the second dielectric layer 3 having a refractive index of from 1.4 to 1.8, in order to satisfy the relationship Aa < Ac, the fourth dielectric layer 8 has a thickness of 15 to 40 nm. In this case, the layer thickness of the medium can be selected so that it is relatively small in size and has a wide range. According to the present embodiment, an optical disc that satisfies the relationship Aa < Ac and has a superior ability to repeatedly record on and reproduce from the optical disc can be produced with high productivity.

Reliabilities of the phase-change optical disc produced under the above conditions will now be described. An optical disc of the present embodiment is rotated with a linear velocity of, for example, 5.9 m/sec. An optical head having an objective lens with a numerical aperture of 0.65 is used for recording information. The information is recorded on the optical disc by irradiating a blue laser beam having a wavelength of 405 nm. Firstly, a signal having a frequency of 4 MHz and a duty ratio of 50% is recorded on a land portion. Subsequently, a signal having a frequency of 8 MHz and a duty ratio of 50% is repeatedly recorded on groove portions adjacent to both sides of the land portion. The change in the carrier of the signal recorded on the land portion and having the frequency of 4 MHz is measured. According to the results, even when information is repeatedly rewritten on the groove portions adjacent to the land portion, the signal recorded on the land portion is not affected at all. In addition, even when a signal having a frequency of 4 MHz and a duty ratio of 50% is recorded on this optical disc 500,000 times, the carrier and noise are not changed.

Examples using a mixed gas that does not contain N₂ gas will now be described with reference to Fig. 7. In order to form the second dielectric layer 3 (see, Fig. 1), a silicon oxide (SiO) layer is deposited by reactive sputtering. The reactive sputtering is performed using a target composed of Si in a mixed gas that does not contain N₂ but contains Ar and O₂ with a gas pressure of, for example, 0.2 Pa. The distance between the target and the substrate is 15 cm. The power density is, for example, 2.5 W/cm². In these examples, the content of O₂ in the mixed gas is changed.

Referring to Fig. 7, when the O₂ gas content is from 10 to 30 volume percent, the SiO layer has a refractive index of from about 1.4 to about 1.5. In this case, however, the deposition rate is 2 nm/min or less. This deposition rate is very low compared with the above described deposition rate (about 7 to about 13 nm/min) wherein the layer is deposited in a mixed gas composed of Ar, O₂, and N₂. According to this method, the refractive index is satisfied with the relationship Aa < Ac. However, this method is not suitable for mass production because of the very low deposition rate.

As described above, when the second dielectric layer 3 is deposited using a target composed of Si or a sintered product of SiO₂ in a mixed gas atmosphere containing oxygen and a rare gas such as argon, a large amount of oxygen must be added to the mixed gas in order to increase the density of the layer and to produce a medium having low noise. On the other hand, the deposition in a mixed gas containing a large amount of oxygen significantly decreases the deposition rate, and therefore significantly decreases productivity.

Examples wherein a mixed gas does not contain O₂ gas will now be described. In order to form the second dielectric layer 3 (see, Fig. 1), a silicon nitride (SiN) layer is deposited by reactive sputtering. The reactive sputtering is performed using a target composed of Si in a mixed gas that does not contain O₂ but contains Ar and N₂ with a gas pressure of, for example, 0.2 Pa. The distance between the target and the substrate is 15 cm. The power density is, for example, 2.5 W/cm². This layer corresponds to the cases where the oxygen content is 0 volume percent in Figs. 3 and 4. Referring to Fig. 4, when the oxygen content is 0 volume percent and the argon content is 70 volume percent, the SiN layer has a refractive index of 1.9. Referring to Fig. 3, the deposition rate of the SiN layer is lower than that of a layer deposited in a mixed gas further containing 2 volume percent or more of O₂ gas. In other words, the deposition of the SiON layer is more suitable for mass production than the deposition of the SiN layer.

The ability to repeatedly record on and reproduce from the following media (i.e., optical discs) will now be described. The media include a medium (an optical disc) including the second dielectric layer 3 composed of the SiN layer having the refractive index of 1.9 and a medium (an optical disc) including the second dielectric layer 3 composed of the SiON layer having the refractive index of 1.4. Examples of the both media will now be described. For example, the notation (substrate / A (a) / B (b)) hereinafter means the following structure: A layer composed of Material A having a thickness of a is formed on a substrate. A layer composed of Material B having a thickness of b is formed on the layer.

The optical disc including the second dielectric layer 3 composed of the silicon nitride (SiN) layer having the refractive index of 1.9 has the following structure: (substrate / ZnS-SiO₂, (5 nm) / SiN (45 nm) / ZnS-SiO₂ (50 nm) / GeN (5 nm) / GeSbTe (11 nm) / GeN (5 nm) / ZnS-SiO₂ (45 nm) / AlTi (100 nm)) The optical disc including the second dielectric layer 3 composed of the silicon oxynitride (SiON) layer having the refractive index of 1.4 has the following structure: (substrate / ZnS-SiO₂ (35 nm) / SiON (40 nm) / ZnS-SiO₂ (30 nm) / GeN (5 nm) / GeSbTe (11 nm) / GeN(5 nm) / ZnS-SiO₂ (25 nm) / AlTi (100 nm)).

The above two optical discs are rotated with a linear velocity of, for example, 5.9 m/sec. An optical head having an objective lens with a numerical aperture of 0.65 is used for recording and reproducing a signal. A signal having a frequency of 4 MHz and a duty ratio of 50% is repeatedly recorded on and reproduced from the optical discs by irradiating a laser beam having a wavelength of 400 nm. The repeated cycles of recording and reproduction are counted until the initial value of the reproduced signal decreases by 1 dB. According to the results, in the optical disc including the silicon oxynitride (SiON) layer having the refractive index of 1.4, the signal is not deteriorated at all until recording and reproduction have been repeated 500,000 times. In contrast, in the optical disc including the silicon nitride (SiN) layer having the refractive index of 1.9, the signal begins to deteriorate after about 30,000 times.

The reason for this will now be described. The refractive index of the SiN layer (1.9) is higher than the refractive index of the SiON layer (1.4). In order to satisfy the relationship Aa < Ac, in the optical disc having the second dielectric layer 3 composed of the SiN layer, the fourth dielectric layer 8 (ZnS-SiO₂ layer) must have a thickness (45 nm) larger than the thickness (25 nm) of the fourth dielectric layer 8 in the optical disc having the second dielectric layer 3 composed of the SiON layer. Consequently, it is difficult to dissipate the heat supplied from the laser beam toward the reflecting layer 9, and the recording layer 6 is deteriorated. In addition, the SiN layer has a relatively high hardness and does not have flexibility. Therefore, the SiN layer does not have enough resistance to repetitive thermal stress caused by the repeated recording and reproduction. This property induces the signal deterioration.

In this way, unlike the use of a SiO₂ layer or an Al₂O₃ layer, the use of a SiN layer having the refractive index of about 1.9 as the second dielectric layer 3 does not increase noise due to an oxygen defect. However, the use of the SiN layer as the second dielectric layer 3 decreases the difference between the refractive index of the second dielectric layer 3 and the refractive index of the first dielectric layer 2, compared with the use of the SiO₂ layer or the Al₂O₃ layer. Accordingly, the thickness of the fourth dielectric layer 8 is significantly limited in order to satisfy the condition that the optical absorptivity Aa in the amorphous state of the recording layer is lower than the optical absorptivity Ac in the crystalline state. When the SiN layer is used as the second dielectric layer 3, freedom in the design of the overall optical information recording medium is decreased, and the fourth dielectric layer 8 must have a relatively large thickness. In this case, the preferable ability to repeatedly record on and reproduce from the medium is not obtained.

As described above, the use of the silicon nitride (SiN) layer as the second dielectric layer 3 decreases productivity and the reliability of the optical disc. In contrast, the use of the silicon oxynitride (SiON) layer as the second dielectric layer 3 provides a phase-change optical disc having high productivity, broad design freedom, and high reliability.

Referring to Fig. 4, a SiON layer having a refractive index of about 1.95 can be produced using a mixed gas containing 90 volume percent of argon, 1 volume percent of oxygen, and the remaining part nitrogen. When such a SiON layer is used as the second dielectric layer 3, however, as well as the above SiN layer having the refractive index of 1.9, the fourth dielectric layer 8 (a ZnS-SiO₂ layer) must have a relatively large thickness in order to satisfy the relationship Aa < Ac. Consequently, it is difficult to dissipate the heat supplied from the laser beam toward the reflecting layer 9, and the recording layer 6 is deteriorated. Accordingly, when the SiON layer is used as the second dielectric layer 3, the refractive index of the SiON layer is preferably below 1.9.

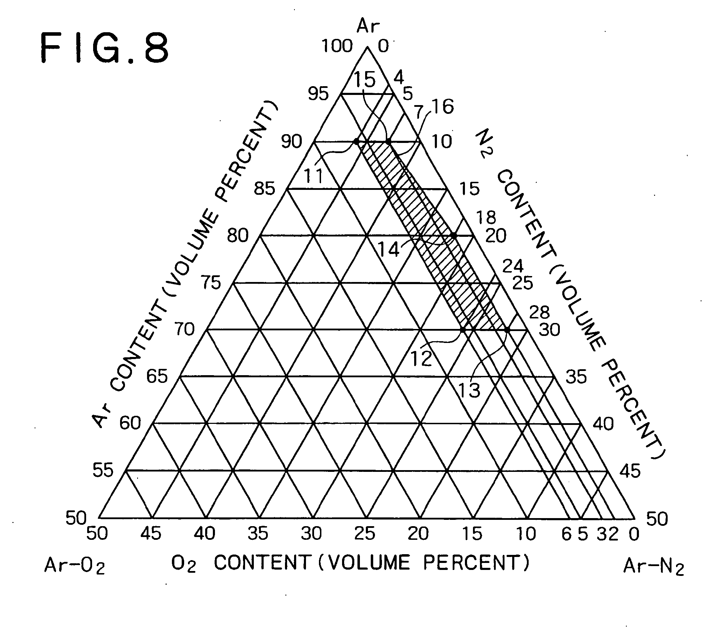

A second embodiment of the present invention will now be described. Fig. 8 is a ternary diagram showing the compositional range of the atmospheric gas wherein a second dielectric layer 3 is formed by reactive sputtering in the present embodiment. The present embodiment relates to a method for manufacturing the optical disc according to the above second example. The difference between the second embodiment and the first embodiment is that an aluminum oxynitride (AlON) layer is deposited to form the second dielectric layer 3, instead of the silicon oxynitride (SiON) layer deposited in the first embodiment. The rest of the structure and the advantages in the present embodiment are the same as in the first embodiment.

As shown in Fig. 1, the first dielectric layer 2 is formed on the transparent substrate 1, as in the first embodiment. Subsequently, in order to form the second dielectric layer 3, an AlON layer is deposited on the first dielectric layer 2 by reactive sputtering such that the AlON layer has a thickness of, for example, 40 nm. The reactive sputtering is performed using a target composed of Al in a mixed gas atmosphere containing Ar, N₂, and O₂ with a gas pressure of, for example, 0.2 Pa. The power density is, for example, 2.5 W/cm².

Referring to Fig. 8, the composition of the mixed gas used in this reactive sputtering lies in a pentagon 16 including five sides in the Ar-O-N ternary diagram. The pentagon 16 is formed by linking a first point 11 wherein the argon content is 90 volume percent, the oxygen content is 6 volume percent, and the nitrogen content is 4 volume percent; a second point 12 wherein the argon content is 70 volume percent, the oxygen content is 6 volume percent, and the nitrogen content is 24 volume percent; a third point 13 wherein the argon content is 70 volume percent, the oxygen content is 2 volume percent, and the nitrogen content is 28 volume percent; a fourth point 14 wherein the argon content is 80 volume percent, the oxygen content is 2 volume percent, and the nitrogen content is 18 volume percent; and a fifth point 15 wherein the argon content is 90 volume percent, the oxygen content is 3 volume percent, and the nitrogen content is 7 volume percent.

Subsequently, as in the first embodiment, the third dielectric layer 4, the first interface layer 5, the recording layer 6, the second interface layer 7, the fourth dielectric layer 8, and the reflecting layer 9 are formed on the second dielectric layer 3 in this order. A transparent substrate is then laminated on the reflecting layer 9 to produce the optical disc according to the second example.

As described above, the compositional range of the mixed gas used for depositing the second dielectric layer 3 preferably lies in the pentagon 16 including five sides in Fig. 8. The reason for this will now be described.

An AlON layer, which forms the second dielectric layer 3, is deposited by the method according to the second embodiment. In the method, the composition of a mixed gas used in the reactive sputtering is changed as follows: The Ar content is changed from 60 to 95 volume percent, the O₂ content is changed from 0 to 10 volume percent, and the N₂ content is changed from 1 to 40 volume percent. As described above, a target composed of Al is used and the gas pressure during deposition is fixed at 0.2 Pa.

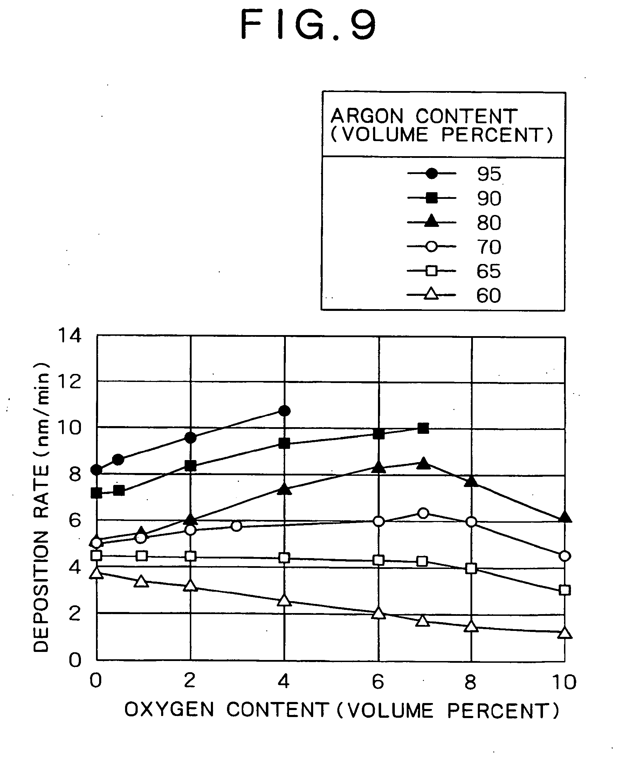

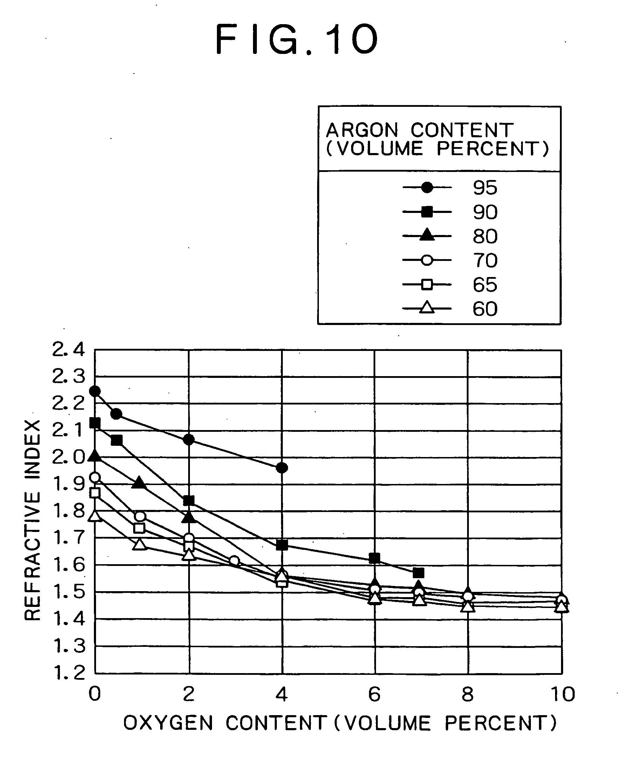

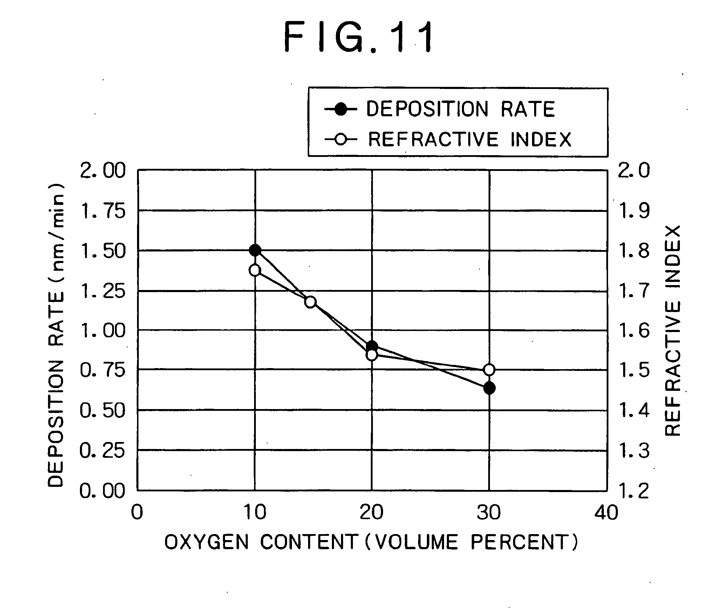

Fig. 9 is a graph showing an effect of O₂ gas (oxygen content) in a mixed gas on the deposition rate. In Fig. 9, the horizontal axis indicates the O₂ gas content in the mixed gas, and the vertical axis indicates the deposition rate of an AlON layer. Fig. 10 is a graph showing an effect of O₂ gas (oxygen content) in a mixed gas on the refractive index. In Fig. 10, the horizontal axis indicates the O₂ gas content in the mixed gas, and the vertical axis indicates the refractive index of an AlON layer. Fig. 11 is a graph showing an effect of O₂ gas (oxygen content) in a mixed gas, which does not contain N₂ gas, on the deposition rate and the refractive index. In Fig. 11, the horizontal axis indicates the O₂ gas content in the mixed gas, and the vertical axis indicates the deposition rate and the refractive index of an aluminum oxide (AlO) layer.

Referring to Fig. 9, when the Ar gas content is 70 volume percent or more, the increase in the O₂ gas content increases the deposition rate of the AlON layer. In a fixed O₂ gas content, as the Ar gas content is increased, the deposition rate of the AlON layer is increased. In contrast, when the Ar gas content is 65 volume percent or less, the increase in the O₂ gas content gradually decreases the deposition rate of the AlON layer. As described above, these behaviors are observed in the deposition of SiON layers by reactive sputtering.

Referring to Fig. 10, the increase in the O₂ gas content gradually decreases the refractive index of the AlON layer. As the Ar gas content is decreased, the refractive index is decreased.

As described above, the refractive index of the second dielectric layer 3 must be lower than the refractive index (2.35) of ZnS-SiO₂ layers that form the first dielectric layer 2 and the third dielectric layer 4. In addition, the refractive index (2.35) of these first and third dielectric layers 2 and 4, and the refractive index of the second dielectric layer 3 must have a large difference. The reason for this is the same as in the first embodiment using the second dielectric layer 3 composed of a SiON layer. In view of productivity, the deposition rate is required to be as high as possible. In order to meet the above conditions, when the Ar gas content is from 70 to 80 volume percent, the O₂ gas content is from 2 to 10 volume percent. For the same purpose, when the Ar gas content is 90 volume percent, the O₂ gas content is from 3 to 7 volume percent. However, using a mixed gas containing 7 volume percent or more of O₂ gas gradually decreases the deposition rate. Therefore, according to the composition of a preferable mixed gas, when the Ar gas content is from 70 to 80 volume percent, the O₂ gas content is from 2 to 6 volume percent, and the content of N₂ gas, i.e., the remaining portion, is from 14 to 28 volume percent. In addition, when the Ar gas content is 90 volume percent, the O₂ gas content is from 3 to 6 volume percent, and the content of N₂ gas, i.e., the remaining portion, is from 4 to 7 volume percent. This preferable composition lies in the pentagon 16 including five sides in the ternary diagram shown in Fig. 8.

An AlON layer that forms the second dielectric layer 3 deposited under the above condition has a refractive index (n2) of from 1.45 to 1.8. In the recording layer 6 of a phase-change optical disc having the second dielectric layer 3 deposited under the above condition, the optical absorptivity (Ac) in the crystalline state and the optical absorptivity (Aa) in the amorphous state are measured. In an AlON layer having a refractive index (n2) of 1.45, the Aa is 60.2% and the Ac is 81.8%. In an AlON layer having a refractive index (n2) of 1.8, the Aa is 60.2% and the Ac is 81.5%. Both of the layers satisfy the relationship Aa < Ac. The oxygen content and the density of the above AlON layers are analyzed as in the first embodiment. The AlON layer having the refractive index (n2) of 1.45 contains 60 atomic percent of oxygen and has a density of 2.0 g/cm³. An AlON layer having a refractive index (n2) of 1.6 contains 50 atomic percent of oxygen and has a density of 2.2 g/cm³. The AlON layer having the refractive index (n2) of 1.8 contains 20 atomic percent of oxygen and has a density of 2.4 g/cm³. In order to satisfy the relationship Aa < Ac in terms of the optical absorptivity, the fourth dielectric layer 8 has a thickness of 15 to 40 nm, as in the case where a SiON layer is used as the second dielectric layer 3. In this case, the layer thickness in the medium can be selected so that it has a relatively wide range.

Reliabilities of the phase-change optical disc produced under the above conditions will now be described. An optical disc of the present embodiment is rotated with a linear velocity of, for example, 5.9 m/sec. An optical head having an objective lens with a numerical aperture of 0.65 is used for recording information. The information is recorded on the optical disc by irradiating a blue laser beam having a wavelength of 405 nm. Firstly, a signal having a frequency of 4 MHz and a duty ratio of 50% is recorded on a land portion. Subsequently, a signal having a frequency of 8 MHz and a duty ratio of 50% is repeatedly recorded on groove portions adjacent to both sides of the land portion. The change in the carrier of the signal recorded on the land portion and having the frequency of 4 MHz is measured. According to the results, even when information is repeatedly rewritten on the groove portions adjacent to the land portion, the signal recorded on the land portion is not affected at all. In addition, even when a signal having a frequency of 4 MHz and a duty ratio of 50% is recorded on this optical disc 500,000 times, the carrier and noise are not changed.

Examples using a mixed gas that does not contain N₂ gas will now be described with reference to Fig. 11. In order to form the second dielectric layer 3 (see, Fig. 1), an aluminum oxide (AlO) layer is deposited by reactive sputtering. The reactive sputtering is performed using a target composed of Al in a mixed gas that does not contain N₂ but contains Ar and O₂ with a gas pressure of, for example, 0.2 Pa. The distance between the target and the substrate is 15 cm. The power density is, for example, 2.5 W/cm². In these examples, the content of O₂ in the mixed gas is changed.

Referring to Fig. 11, when the O₂ gas content is from 10 to 30 volume percent, the AlO layer has a refractive index of from about 1.5 to about 1.75. In this case, however, the deposition rate is 1.5 nm/min or less. This deposition rate is very low compared with the above described deposition rate (about 6 to about 10 nm/min) wherein the layer is deposited in a mixed gas composed of Ar, O₂, and N₂. According to this method, the refractive index is satisfied with the relationship Aa < Ac. However, this method is not suitable for mass production because of the very low deposition rate.

As described above, when the layer is deposited using a target composed of Al or a sintered product of Al₂O₃ in a mixed gas atmosphere containing oxygen and a rare gas such as argon, a large amount of oxygen must be added to the mixed gas in order to increase the density of the layer and to produce a medium having low noise. On the other hand, the deposition in a mixed gas containing a large amount of oxygen significantly decreases the deposition rate, and therefore significantly decreases productivity.

Examples wherein a mixed gas does not contain O₂ gas will now be described. In order to form the second dielectric layer 3 (see, Fig. 1), an aluminum nitride (AlN) layer is deposited by reactive sputtering. The reactive sputtering is performed using a target composed of Al in a mixed gas that does not contain O₂ but contains Ar and N₂ with a gas pressure of, for example, 0.2 Pa. The distance between the target and the substrate is 15 cm. The power density is, for example, 2.5 W/cm². This layer corresponds to the cases where the oxygen content is 0 volume percent in Figs. 9 and 10. Referring to Fig. 10, when the oxygen content is 0 volume percent and the argon content is 70 volume percent, the AlN layer has a refractive index of 1.94. Referring to Fig. 9, the deposition rate of the AlN layer is lower than that of a layer deposited in a mixed gas further containing 2 volume percent or more of O₂ gas. In other words, the deposition of the AlON layer described in the second embodiment is more suitable for mass production than the deposition of the AlN layer.

The ability to repeatedly record on and reproduce from the following media (i.e., optical discs) will now be described. The media include a medium (an optical disc) including the second dielectric layer 3 composed of the AlN layer having a refractive index of 1.94 and a medium (an optical disc) including the second dielectric layer 3 composed of an AlON layer having a refractive index of 1.55.

Examples of the both media will now be described. For example, the optical disc including the second dielectric layer 3 composed of the aluminum nitride (AlN) layer having the refractive index of 1.94 has the following structure: (substrate / ZnS-SiO₂ (5 nm) / AlN (40 nm) / ZnS-SiO₂ (50 nm) / GeN (5 nm) / GeSbTe (11 nm) / GeN (5 nm) / ZnS-SiO₂ (50 nm) / AlTi (100 nm)). For example, the optical disc including the second dielectric layer 3 composed of the aluminum oxynitride (AlON) layer having the refractive index of 1.55 has the following structure: (substrate / ZnS-SiO₂ (35 nm) / AlON (40 nm) / ZnS-SiO₂ (30 nm) / GeN (5 nm) / GeSbTe (11 nm) / GeN (5 nm) / ZnS-SiO₂ (25 nm) / AlTi (100 nm)).

The above two optical discs are rotated with a linear velocity of, for example, 5.9 m/sec. An optical head having an objective lens with a numerical aperture of 0.65 is used for recording and reproducing a signal. A signal having a frequency of 4 MHz and a duty ratio of 50% is repeatedly recorded on and reproduced from the optical discs by irradiating a laser beam having a wavelength of 400 nm. The repeated cycles of recording and reproduction are counted until the initial value of the reproduced signal decreases by 1 dB. According to the results, in the optical disc including the aluminum oxynitride (AlON) layer having the refractive index of 1.55, the signal is not deteriorated at all until recording and reproduction have been repeated 500,000 times. In contrast, in the optical disc including the aluminum nitride (AlN) layer having the refractive index of 1.94, the signal begins to deteriorate after about 30,000 times.

The reason for this will now be described. The refractive index of the AlN layer (1.94) is higher than the refractive index of the AlON layer (1.55). In order to satisfy the relationship Aa < Ac, in the optical disc having the second dielectric layer 3 composed of the AlN layer, the fourth dielectric layer 8 (ZnS-SiO₂ layer) must have a thickness (50 nm) larger than the thickness (25 nm) of the fourth dielectric layer 8 in the optical disc having the second dielectric layer 3 composed of the AlON layer. Consequently, it is difficult to dissipate the heat supplied from the laser beam toward the reflecting layer 9, and the recording layer 6 is deteriorated. In addition, the AlN layer has a relatively high hardness and does not have flexibility. Therefore, the AlN layer does not have enough resistance to repetitive thermal stress caused by the repeated recording and reproduction. This property induces the signal deterioration.

As described above, the use of the aluminum nitride (AlN) layer as the second dielectric layer 3 decreases productivity and the reliability of the optical disc. In contrast, the use of the aluminum oxynitride (AlON) layer as the second dielectric layer 3 provides a phase-change optical disc having high productivity, broad design freedom, and high reliability.

A third embodiment of the present invention will now be described. The present embodiment relates to a method for manufacturing the optical disc according to the above third example. The difference between the third embodiment and the first embodiment is that an aluminum silicon oxynitride (AlSiON) layer is deposited to form the second dielectric layer 3, instead of the silicon oxynitride (SiON) layer deposited in the first embodiment. The rest of the structure and the advantages in the present embodiment are the same as in the first embodiment.

As shown in Fig. 1, the first dielectric layer 2 is formed on the transparent substrate 1, as in the first embodiment. Subsequently, in order to form the second dielectric layer 3, an AlSiON layer is deposited on the first dielectric layer 2 by reactive sputtering such that the AlSiON layer has a thickness of, for example, 40 nm. The reactive sputtering is performed using a target composed of an Al-Si alloy in a mixed gas atmosphere containing Ar, N₂, and O₂ with a gas pressure of, for example, 0.2 Pa. The power density is, for example, 2.5 W/cm². The composition of the mixed gas used in this reactive sputtering is as follows: The Ar content is from 70 to 90 volume percent, the O₂ content is from 2 to 6 volume percent, and the N₂ content, i.e., the remaining portion, is from 4 to 28 volume percent. The compositional range of this mixed gas is the same as in the first embodiment in which a SiON layer is deposited to form the second dielectric layer 3. That is, the compositional range of the mixed gas lies in the area 10 in Fig. 2.

Subsequently, as in the first embodiment, the third dielectric layer 4, the first interface layer 5, the recording layer 6, the second interface layer 7, the fourth dielectric layer 8, and the reflecting layer 9 are formed on the second dielectric layer 3 in this order. A transparent substrate is then laminated on the reflecting layer 9 to produce the optical disc according to the third example.

As described above, according to the preferable composition of the mixed gas used for depositing the second dielectric layer 3, the Ar content is from 70 to 90 volume percent, the O₂ content is from 2 to 6 volume percent, and the N₂ content is from 4 to 28 volume percent. The reason for this will now be described.

An AlSiON layer, which forms the second dielectric layer 3, is deposited by the method according to the third embodiment. In the method, the composition of a mixed gas used in the reactive sputtering is changed as follows: The Ar content is changed from 60 to 95 volume percent, the O₂ content is changed from 0 to 10 volume percent, and the N₂ content is changed from 1 to 40 volume percent. As described above, a target composed of the Al-Si alloy is used and the gas pressure during deposition is fixed at 0.2 Pa.

According to the results, as in the first embodiment, when the Ar gas content is 70 volume percent or more, the increase in the O₂ gas content increases the deposition rate of the AlSiON layer. The increase in the O₂ gas content gradually decreases the refractive index of the AlSiON layer. As the Ar gas content is decreased, the refractive index is decreased.

When the AlSiON layer is used as the second dielectric layer 3, the refractive index of the second dielectric layer 3 must be controlled from 1.4 to 1.8; in addition, the deposition rate of the AlSiON layer must be increased. According to the above results, in order to meet these requirements, the mixed gas used in the reactive sputtering preferably has the following composition: The content of Ar gas is from 70 to 90 volume percent, the content of O₂ gas is from 2 to 6 volume percent, and the content of N₂ gas, i.e., the remaining portion, is from 4 to 28 volume percent.

In the recording layer 6 of a phase-change optical disc having the second dielectric layer 3 deposited by the above method, the optical absorptivity (Ac) in the crystalline state and the optical absorptivity (Aa) in the amorphous state are measured. In an AlSiON layer having a refractive index (n2) of 1.4, the Aa is 62.2% and the Ac is 82.4%. In an AlSiON layer having a refractive index (n2) of 1.8, the Aa is 60.2% and the Ac is 81.5%. Both of the layers satisfy the relationship Aa < Ac. The oxygen content and the density of the above AlSiON layers are analyzed as for the SiON layers in the first embodiment. The AlSiON layer having the refractive index of 1.4 contains 70 atomic percent of oxygen and has a density of 2 g/cm³. An AlSiON layer having a refractive index of 1.6 contains 50 atomic percent of oxygen and has a density of 2.2 g/cm³. The AlSiON layer having the refractive index of 1.8 contains 20 atomic percent of oxygen and has a density of 2.4 g/cm³. In order to satisfy the relationship Aa < Ac, the fourth dielectric layer 8 has a thickness of 15 to 40 nm, as in the case where a SiON layer is used as the second dielectric layer 3. In this case, the layer thickness of the medium can be selected so that it is relatively small in size and has a wide range. According to the present embodiment, an optical disc that satisfies the relationship Aa < Ac and has a superior ability to repeatedly record on and reproduce from the optical disc can be produced with high productivity.

Reliabilities of the phase-change optical disc of the present embodiment will now be described. The optical disc is rotated with a linear velocity of, for example, 5.9 m/sec. An optical head having an objective lens with a numerical aperture of 0.65 is used for recording information. The information is recorded on the optical disc by irradiating a blue laser beam having a wavelength of 405 nm. Firstly, a signal having a frequency of 4 MHz and a duty ratio of 50% is recorded on a land portion. Subsequently, a signal having a frequency of 8 MHz and a duty ratio of 50% is repeatedly recorded on groove portions adjacent to both sides of the land portion. The change in the carrier of the signal recorded on the land portion and having the frequency of 4 MHz is measured. According to the results, even when information is repeatedly rewritten on the groove portions adjacent to the land portion, the signal recorded on the land portion is not affected at all. In addition, even when a signal having a frequency of 4 MHz and a duty ratio of 50% is recorded on this optical disc 500,000 times, the carrier and noise are not changed.

In the first embodiment to the third embodiment, for example, the composition, the number of layers forming each layer, and the deposition method of the first dielectric layer 2, the third dielectric layer 4, the first interface layer 5, the recording layer 6, the second interface layer 7, and the fourth dielectric layer 8 are not limited to the above described examples. These conditions can be modified according to required recording and reproducing characteristics and application. In this case, the medium also has the same advantages as in the first embodiment to the third embodiment.

The material and the thickness of the transparent substrate 1 are not limited to the above and can be modified according to need. A medium having the modified transparent substrate also has the same advantages as in the first embodiment to the third embodiment.

According to the first embodiment to the third embodiment, in the deposition of the silicon oxynitride layer, the aluminum oxynitride layer, or the aluminum silicon oxynitride layer by reactive sputtering, the gas pressure of the atmospheric gas is controlled to 0.2 Pa. The gas pressure may be from 0.09 to 0.5 Pa. When the silicon oxynitride layer, the aluminum oxynitride layer, or the aluminum silicon oxynitride layer is formed in a mixed gas having the above composition of Ar, O₂, and N₂ with a gas pressure in the above range, the deposition rate and the refractive index of the layer are the same as in the above embodiments. The layer also has the same characteristics as in the first embodiment to the third embodiment.

In the first embodiment to the third embodiment, a target composed of silicon (Si), aluminum (Al), or an aluminum-silicon (Al-Si) alloy is used for depositing the second dielectric layer 3 by reactive sputtering. The target is not limited to the above. For example, the reactive sputtering may be performed with a target composed of SiO₂, Al₂O₃, or SiAlO in a mixed gas atmosphere containing oxygen, nitrogen, and a rare gas such as argon. The use of these targets also provides the same advantages as in the first embodiment to the third embodiment.

Furthermore, in the first embodiment to the third embodiment, an in-line sputtering apparatus is used for forming thin layers on a medium. Needless to say, the use of an apparatus in which a single substrate is processed also provides the same advantages.

## Claims

1. A method for manufacturing an optical information recording medium comprising the steps of:
forming a first dielectric layer (2) on a substrate (1);
forming a second dielectric layer (3) on said first dielectric layer (2);
forming a third dielectric layer (4) on said second dielectric layer (3); and
forming a recording layer (6) on said third dielectric layer (4),
forming a fourth dielectric layer (8) on said recording layer (6);
forming a reflecting layer (9) on said fourth dielectric layer (8);
wherein said second dielectric layer (3) is composed of an oxynitride by Y reactive sputtering in an atmosphere containing argon gas, oxygen gas, and nitrogen gas,
**characterized in that** said reactive sputtering is performed using a target containing silicon and using a mixed gas composed of argon, oxygen, and nitrogen, and
the argon content in said mixed gas is from 70 to 90 volume percent, the oxygen content in said mixed gas is from 2 to 6 volume percent, and the nitrogen content in said mixed gas is from 4 to 28 volume percent.

2. A method for manufacturing an optical information recording medium comprising the steps of:
forming a first dielectric layer (2) on a substrate (1);
forming a second dielectric layer (3) on said first dielectric layer (2);
forming a third dielectric layer (4) on said second dielectric layer (3); and
forming a recording layer (6) on said third dielectric layer (4),
forming a fourth dielectric layer (8) on said recording layer (6);
forming a reflecting layer (9) on said fourth dielectric layer (8);
wherein said second dielectric layer (3) is composed of an oxynitride by reactive sputtering in an atmosphere containing argon gas, oxygen gas, and nitrogen gas,
**characterized in that** said reactive sputtering is performed using a target containing aluminum and using a mixed gas composed of argon, oxygen, and nitrogen, and
the composition of said mixed gas lies in a pentagon including five sides in a ternary diagram showing volume contents of argon gas, oxygen gas, and nitrogen gas, the pentagon being formed by linking a first point in which the argon content is 90 volume percent, the oxygen content is 6 volume percent, and the nitrogen content is 4 volume percent; a second point in which the argon content is 70 volume percent, the oxygen content is 6 volume percent, and the nitrogen content is 24 volume percent; a third point in which the argon content is 70 volume percent, the oxygen content is 2 volume percent, and the nitrogen content is 28 volume percent; a fourth point in which the argon content is 80 volume percent, the oxygen content is 2 volume percent, and the nitrogen content is 18 volume percent; and a fifth point in which the argon content is 90 volume percent, the oxygen content is 3 volume percent, and the nitrogen content is 7 volume percent.

3. A method for manufacturing an optical information recording medium comprising the steps of:
forming a first dielectric layer (2) on a substrate (1);
forming a second dielectric layer (3) on said first dielectric layer (2);
forming a third dielectric layer (4) on said second dielectric layer (3); and
forming a recording layer (6) on said third dielectric layer (4),
forming a fourth dielectric layer (8) on said recording layer (6);
forming a reflecting layer (9) on said fourth dielectric layer (8);
wherein said second dielectric layer (3) is composed of an oxynitride by reactive sputtering in an atmosphere containing argon gas, oxygen gas, and nitrogen gas,
**characterized in that** said reactive sputtering is performed using a target containing silicon and aluminum and using a mixed gas composed of argon, oxygen, and nitrogen, and
the argon content in said mixed gas is from 70 to 90 volume percent, the oxygen content in said mixed gas is from 2 to 6 volume percent, and the nitrogen content in said mixed gas is from 4 to 28 volume percent.

4. The method for manufacturing an optical information recording medium according to claim 1, 2, or 3, **characterized in that** said first dielectric layer (2), said third dielectric layer (4), said recording layer (6), said fourth dielectric layer (8), and said reflecting layer (9) are formed by sputtering.

## Patentansprüche

1. Verfahren zur Herstellung eines optischen Informationsaufzeichnungsmediums mit den Schritten:
Bilden einer ersten dielektrischen Schicht (2) auf einem Substrat (1);
Bilden einer zweiten dielektrischen Schicht (3) auf der ersten dielektrischen Schicht (2);
Bilden einer dritten dielektrischen Schicht (4) auf der zweiten dielektrischen Schicht (3); und
Bilden einer Aufzeichnungsschicht (6) auf der dritten dielektrischen Schicht (4),
Bilden einer vierten dielektrischen Schicht (8) auf der Aufzeichnungsschicht (6);
Bilden einer Reflexionsschicht (9) auf der vierten dielektrischen Schicht (8);
wobei sich die zweite dielektrische Schicht (3) durch reaktives Sputtern in einer Argongas, Sauerstoffgas und Stickstoffgas enthaltenden Atmosphäre aus einem Oxynitrid zusammensetzt,
**dadurch gekennzeichnet, daß** das reaktive Sputtern mit Hilfe eines Silicium enthaltenden Targets und mit Hilfe eines sich aus Argon, Sauerstoff und Stickstoff zusammensetzenden Mischgases durchgeführt wird, und
der Argongehalt im Mischgas 70 bis 90 Volumenprozent, der Sauerstoffgehalt im Mischgas 2 bis 6 Volumenprozent und der Stickstoffgehalt im Mischgas 4 bis 28 Volumenprozent beträgt.

2. Verfahren zur Herstellung eines optischen Informationsaufzeichnungsmediums mit den Schritten:
Bilden einer ersten dielektrischen Schicht (2) auf einem Substrat (1);
Bilden einer zweiten dielektrischen Schicht (3) auf der ersten dielektrischen Schicht (2);
Bilden einer dritten dielektrischen Schicht (4) auf der zweiten dielektrischen Schicht (3); und
Bilden einer Aufzeichnungsschicht (6) auf der dritten dielektrischen Schicht (4),
Bilden einer vierten dielektrischen Schicht (8) auf der Aufzeichnungsschicht (6);
Bilden einer Reflexionsschicht (9) auf der vierten dielektrischen Schicht (8);
wobei sich die zweite dielektrische Schicht (3) durch reaktives Sputtern in einer Argongas, Sauerstoffgas und Stickstoffgas enthaltenden Atmosphäre aus einem Oxynitrid zusammensetzt,
**dadurch gekennzeichnet, daß** das reaktive Sputtern mit Hilfe eines Aluminium enthaltenden Targets und mit Hilfe eines sich aus Argon, Sauerstoff und Stickstoff zusammensetzenden Mischgases durchgeführt wird, und
die Zusammensetzung des Mischgases in einem Fünfeck mit fünf Seiten in einem ternären Zustandsdiagramm liegt, das Volumengehalte von Argongas, Sauerstoffgas und Stickstoffgas darstellt, wobei das Fünfeck gebildet ist durch Verbinden eines ersten Punkts, an dem der Argongehalt 90 Volumenprozent, der Sauerstoffgehalt 6 Volumenprozent und der Stickstoffgehalt 4 Volumenprozent beträgt; eines zweiten Punkts, an dem der Argongehalt 70 Volumenprozent, der Sauerstoffgehalt 6 Volumenprozent und der Stickstoffgehalt 24 Volumenprozent beträgt; eines dritten Punkts, an dem der Argongehalt 70 Volumenprozent, der Sauerstoffgehalt 2 Volumenprozent und der Stickstoffgehalt 28 Volumenprozent beträgt; eines vierten Punkts, an dem der Argongehalt 80 Volumenprozent, der Sauerstoffgehalt 2 Volumenprozent und der Stickstoffgehalt 18 Volumenprozent beträgt; und eines fünften Punkts, an dem der Argongehalt 90 Volumenprozent, der Sauerstoffgehalt 3 Volumenprozent und der Stickstoffgehalt 7 Volumenprozent beträgt.

3. Verfahren zur Herstellung eines optischen Informationsaufzeichnungsmediums mit den Schritten:
Bilden einer ersten dielektrischen Schicht (2) auf einem Substrat (1);
Bilden einer zweiten dielektrischen Schicht (3) auf der ersten dielektrischen Schicht (2);
Bilden einer dritten dielektrischen Schicht (4) auf der zweiten dielektrischen Schicht (3); und
Bilden einer Aufzeichnungsschicht (6) auf der dritten dielektrischen Schicht (4),
Bilden einer vierten dielektrischen Schicht (8) auf der Aufzeichnungsschicht (6);
Bilden einer Reflexionsschicht (9) auf der vierten dielektrischen Schicht (8);
wobei sich die zweite dielektrische Schicht (3) durch reaktives Sputtern in einer Argongas, Sauerstoffgas und Stickstoffgas enthaltenden Atmosphäre aus einem Oxynitrid zusammensetzt,
**dadurch gekennzeichnet, daß** das reaktive Sputtern mit Hilfe eines Silicium und Aluminium enthaltenden Targets und mit Hilfe eines sich aus Argon, Sauerstoff und Stickstoff zusammensetzenden Mischgases durchgeführt wird, und
der Argongehalt im Mischgas 70 bis 90 Volumenprozent, der Sauerstoffgehalt im Mischgas 2 bis 6 Volumenprozent und der Stickstoffgehalt im Mischgas 4 bis 28 Volumenprozent beträgt.

4. Verfahren zur Herstellung eines optischen Informationsaufzeichnungsmediums nach Anspruch 1, 2 oder 3,
**dadurch gekennzeichnet, daß** die erste dielektrische Schicht (2), die dritte dielektrische Schicht (4), die Aufzeichnungsschicht (6), die vierte dielektrische Schicht (8) und die Reflexionsschicht (9) durch Sputtern gebildet werden.

## Revendications

1. Procédé de fabrication d'un support d'enregistrement d'informations optique comprenant les étapes consistant à :
former une première couche diélectrique (2) sur un substrat (1) ;
former une deuxième couche diélectrique (3) sur ladite première couche diélectrique (2) ;
former une troisième couche diélectrique (4) sur ladite deuxième couche diélectrique (3) ; et
former une couche d'enregistrement (6) sur ladite troisième couche diélectrique (4) ;
former une quatrième couche diélectrique (8) sur ladite couche d'enregistrement (6) ;
former une couche réflectrice (9) sur ladite quatrième couche diélectrique (8) ;
dans lequel ladite deuxième couche diélectrique (3) est composée d'un oxynitrure par pulvérisation réactive dans une atmosphère contenant de l'argon gazeux, de l'oxygène gazeux et de l'azote gazeux,
**caractérisé en ce que** ladite pulvérisation réactive est effectuée en utilisant une cible contenant du silicium et en utilisant un gaz mixte composé d'argon, d'oxygène et d'azote, et
la teneur en argon dans ledit gaz mixte est de 70 à 90 pour cent en volume, la teneur en oxygène dans ledit gaz mixte est de 2 à 6 pour cent en volume et la teneur en azote dans ledit gaz mixte est de 4 à 28 pour cent en volume.

2. Procédé de fabrication d'un support d'enregistrement d'informations optique comprenant les étapes consistant à :
former une première couche diélectrique (2) sur un substrat (1) ;
former une deuxième couche diélectrique (3) sur ladite première couche diélectrique (2) ;
former une troisième couche diélectrique (4) sur ladite deuxième couche diélectrique (3) ; et
former une couche d'enregistrement (6) sur ladite troisième couche diélectrique (4) ;
former une quatrième couche diélectrique (8) sur ladite couche d'enregistrement (6) ;
former une couche réflectrice (9) sur ladite quatrième couche diélectrique (8) ;
dans lequel ladite deuxième couche diélectrique (3) est composée d'un oxynitrure par pulvérisation réactive dans une atmosphère contenant de l'argon gazeux, de l'oxygène gazeux et de l'azote gazeux,
**caractérisé en ce que** ladite pulvérisation réactive est effectuée en utilisant une cible contenant de l'aluminium et en utilisant un gaz mixte composé d'argon, d'oxygène et d'azote, et
la composition dudit gaz mixte se situe dans un pentagone incluant cinq côtés dans un diagramme ternaire représentant les teneurs en volume d'argon gazeux, d'oxygène gazeux et d'azote gazeux, le pentagone étant formé en reliant un premier point où la teneur en argon est de 90 pour cent en volume, la teneur en oxygène est de 6 pour cent en volume et la teneur en azote est de 4 pour cent en volume ; un deuxième point où la teneur en argon est de 70 pour cent en volume, la teneur en oxygène est de 6 pour cent en volume et la teneur en azote est de 24 pour cent en volume ; un troisième point où la teneur en argon est de 70 pour cent en volume, la teneur en oxygène est de 2 pour cent en volume et la teneur en azote est de 28 pour cent en volume ; un quatrième point où la teneur en argon est de 80 pour cent en volume, la teneur en oxygène est de 2 pour cent en volume et la teneur en azote est de 18 pour cent en volume ; et un cinquième point où la teneur en argon est de 90 pour cent en volume, la teneur en oxygène est de 3 pour cent en volume et la teneur en azote est de 7 pour cent en volume.

3. Procédé de fabrication d'un support d'enregistrement d'informations optique comprenant les étapes consistant à :
former une première couche diélectrique (2) sur un substrat (1) ;
former une deuxième couche diélectrique (3) sur ladite première couche diélectrique (2) ;
former une troisième couche diélectrique (4) sur ladite deuxième couche diélectrique (3) ; et
former une couche d'enregistrement (6) sur ladite troisième couche diélectrique (4) ;
former une quatrième couche diélectrique (8) sur ladite couche d'enregistrement (6) ;
former une couche réflectrice (9) sur ladite quatrième couche diélectrique (8) ;
dans lequel ladite deuxième couche diélectrique (3) est composée d'un oxynitrure par pulvérisation réactive dans une atmosphère contenant de l'argon gazeux, de l'oxygène gazeux et de l'azote gazeux,
**caractérisé en ce que** ladite pulvérisation réactive est effectuée en utilisant une cible contenant du silicium et de l'aluminium et en utilisant un gaz mixte composé d'argon, d'oxygène et d'azote, et
la teneur en argon dans ledit gaz mixte est de 70 à 90 pour cent en volume, la teneur en oxygène dans ledit gaz mixte est de 2 à 6 pour cent en volume et la teneur en azote dans ledit gaz mixte est de 4 à 28 pour cent en volume.

4. Procédé de fabrication d'un support d'enregistrement d'informations optique selon la revendication 1, 2 ou 3, **caractérisé en ce que** ladite première couche diélectrique (2), ladite troisième couche diélectrique (4), ladite couche d'enregistrement (6), ladite quatrième couche diélectrique (8) et ladite couche réflectrice (9) sont formées par pulvérisation.
